# EUROPÄISCHE PATENTSCHRIFT

(11) **EP 0 771 106 B1**
(45) Veröffentlichungstag und Bekanntmachung des Hinweises auf die Patenterteilung: **13.08.2008**
(21) Anmeldenummer: 96116649.3
(22) Anmeldetag: 17.10.1996
(51) Int. Cl.: H04N 5/235

(54) **Fernsehtelefonanlage**
Videophone system
Système vidéophone

(30) Priorität: 26.10.1995 DE 19539803
(43) Veröffentlichungstag der Anmeldung: 02.05.1997
(73) Patentinhaber: THOMSON Licensing, 92100 Boulogne-Billancourt (FR)
(72) Erfinder: Spruck, Manfred, 67100 Strasbourg (FR); Hölzemann, Herbert, 78068 Brigachtal (DE); Seegert, Bernhard, 78052 Villingen-Schwenningen (DE)

(56) Entgegenhaltungen:
- EP-A- 0 360 026
- DE-A- 3 534 986
- US-A- 3 798 367
- US-A- 5 406 323
- PATENT ABSTRACTS OF JAPAN vol. 1996, no. 02, 29. Februar 1996 (1996-02-29) -& JP 07 264465 A (SANYO ELECTRIC CO LTD), 13. Oktober 1995 (1995-10-13)
- T.A. WHITE ET AL. : "Subjective assement of flicker in visual-telephone" PROCEEDINGS OF THE INSTITUTION OF ELECTRICAL ENGINEERS, Bd. 121, Nr. 7, Juli 1974 (1974-07), Seiten 594-600, XP002151752 STEVENAGE.; GB
- SAKAE OKUBO: "Reference Model Methodology - A Tool for the Collaborative Creation of Video Coding Standards" PROCEEDINGS OF THE IEEE, Bd. 83, Nr. 2, 1. Februar 1995 (1995-02-01), Seiten 139-150, USA

## Beschreibung

Die Erfindung geht aus von einer Fernsehtelefonanlage gemäß dem Oberbegriff des Anspruchs 1. Bei einer derartigen Anlage, auch Videophone genannt, muß die Lichtmenge des von dem Objektiv auf das Target fallenden Lichtes steuerbar sein. Hierzu ist es bekannt, wie bei einem Fotoapparat eine Blende vorzusehen, die mehr oder weniger weit geöffnet wird.

Zur Verringerung der Kosten einer derartigen mechanisch einstellbaren Blende ist es auch bekannt, eine feste Blendenöffnung vorzusehen, die wie ein Verschluß elektronisch nur vollständig geöffnet oder geschlossen werden kann. Die auf das Target fallende Lichtmenge wird dadurch gesteuert oder geregelt, daß dieser Verschluß jeweils für eine gegenüber der Bilddauer geringe Zeit von etwa 0,5 - 1 ms geöffnet wird. Die auf das Target fallende Lichtmenge wird dabei also elektronisch durch Änderung der Öffnungszeit des Verschlusses geändert.

Derartige Fernsehtelefonanlagen arbeiten bei der Signalübertragung in der Regel mit einer Datenreduktion oder Datenkompression. Diese besteht z.B. darin, daß nicht jeweils der Inhalt eines Bildes übertragen wird, sondern nur die Differenzen zwischen aufeinanderfolgenden Bildern. Es hat sich gezeigt, daß bei einer Fernsehtelefonanlage mit gesteuerter Belichtungszeit der beschriebenen Art durch die Datenreduktion Fehler auftraten. Insbesondere zeigte sich, daß auch bei einem konstanten Bild, also ohne Differenzen zwischen aufeinanderfolgenden Bildern, im Codec Macroblöcke generiert wurden, obwohl keine Änderungen im Bild zwischen aufeinanderfolgenden Bildern vorlagen. Die Anwendung der Datenreduktion für eine Kamera mit der genannten gesteuerten Belichtungszeit erschien somit nicht möglich oder problematisch.

Eine Fernsehtelefonanlage mit einer Kamera nach dem Oberbegriff des Anspruchs 1 ist bekannt aus T.A. White et al.: ,,Subjective assessment of flicker in visualtelephone" Proceedings of the Instition of Electrical Engineers, Bd. 121, Nr. 7, Juli 1974 (1974 - 07), Seiten 594 - 600, GB. Aus JP 07-264465 und Patent Abstracts of Japan Bd. 1996, Nr. 02, 29. Februar 1996, ist ein Kamerasystem bekannt, das Störungen im Videosignal des Kamerasystems, verursacht durch das Flackern einer Entladungslampe, vermeidet. Die Kamera dieses Systems ist hierbei mit einem Flackersensor ausgerüstet, der periodische Intensitätsschwankungen im Umgebungslicht wahrnimmt, und über eine PLL-Kontrollschaltung wird ein Referenztaktsignal erzeugt, das einen Verschluss des Kamerasystems derart steuert, dass die Belichtungszeit stets bei der selben Phase der Netzspannung liegt.

In "Reference Model Methodology - A Tool for the Collaborative Creation of Video Coding Standards", PROCEEDINGS OF THE IEEE; Vol. 83, No. 2, February 1995, ist ein Kodierungsstandard H.261 beschrieben, der Makroblöcke verwendet zur Kodierung von Videosignalen.

Aus der DE-A-3534986 ist ein Fernsehaufnahmesystem bekannt, bei dem der Verschluss mit der NetzWechselspannung synchronisiert ist, um störende Flimmererscheinungen zu vermeiden.

Der Erfindung liegt die Aufgabe zugrunde, eine derartige Fernsehtelefonanlage so auszubilden, dass auch bei dem genannten Betrieb mit gesteuerter Belichtungszeit eine Datenreduktion einwandfrei arbeitet und die Erzeugung von überflüssigen Makroblöcken vermieden wird.

Diese Aufgabe wird durch die im Anspruch 1 angegebene Erfindung gelöst. Vorteilhafte Weiterbildungen der Erfindung sind in den Unteransprüchen angegeben,

Die Fernsehtelefonanlage nach der Erfindung weist eine Kamera und einen von einer Steuerschaltung jeweils nur während einer kurzen Belichtungszeit geöffneten Verschluss auf, wobei das von der Kamera erzeugte und zu übertragende Signal einer Datenreduktion unterworfen ist, durch die nur Änderungen im Bild zwischen aufeinanderfolgenden Bildern übertragen werden und Macroblöcke für ein Differenzsignal gebildet werden. Die Steuerschaltung und das das Umgebungslicht erzeugende Stromnetz sind durch eine PLL-Schaltung derart verkoppelt, dass die Belichtungszeit stets bei derselben Phase der Netzspannung liegt, Im Weg des Stromnetzes zu der PLL-Schaltung liegt ein Phasendreher, der von einem den Kamerabetrieb steuernden Mikroprozessor gesteuert ist.

Die Erfindung beruht dabei auf folgenden Erkenntnissen und Überlegungen. Eine Fernsehtelefonanlage arbeitet überwiegend mit künstlichem Licht, insbesondere von Leuchtstoffröhren. Das Umgebungslicht im Bereich des aufzunehmenden Objektes ist daher in der Helligkeit mit der doppelten Netzfrequenz, also 100 Hz, in der Amplitude moduliert, je nach Lichtquelle zwischen 30 % und 100 % oder 90 % und 100 %. Die Bildwiederholfrequenz der Kamera beträgt zwar ebenfalls 50 Hz, ist aber in Frequenz und Phase nicht mit der Netzfrequenz verkoppelt. Durch geringe Frequenzabweichungen verschiebt sich daher in der Regel die gegenüber der Netzfrequenz kurze Belichtungszeit, also die Öffnungszeit des Verschlusses, relativ zur Netzperiode. Im Sinne einer Schwebung liegt also die Belichtungszeit abwechselnd bei höheren und niedrigeren Werten der Helligkeit des Umgebungslichtes. Dadurch kommt es zu einer Amplitudenmodulation des Leuchtdichtesignals und zu Änderungen der Farbtemperatur. Selbst wenn diese Änderungen im wiedergegebenen Bild nicht wahrnehmbar sind, werden sie jedoch von dem Codec für die Datenreduktion registriert, da ein derartiger Codec bereits auf Signaländerungen von 3 % anspricht. Der Codec registriert also diese unerwünschten Signaländerungen selbst bei einem unbewegten Bild als Signal und bildet Makroblöcke für ein Differenzsignal, obwohl im Bild keine Änderungen vorliegen. Hier setzt nun die Erfindung ein, indem durch die Frequenz- und Phasenkopplung zwischen der Bildwiederholfrequenz der Kamera und der Netzfrequenz erreicht wird, daß die kurze Belichtungszeit immer bei derselben Phase der Netzperiode und damit immer bei demselben Helligkeitswert des Umgebungslichtes liegt.

Durch diese Lösung ergeben sich insgesamt folgende Vorteile. Fehler oder Unzulänglichkeiten bei der Datenreduktion durch fälschliche Bildung von Makroblöcken werden vermieden. Dadurch, daß die Belichtungszeit immer bei demselben Wert der Helligkeit des Umgebungslichtes liegt, wird auch eine unerwünschte Amplitudenmodulation des Leuchtdichtesignals durch eine Schwebung vermieden. Außerdem ergeben sich eine minimale Differenz der Verstärkung in den Farbkanälen und keine unerwünschte Änderung der Farbtemperatur. Es ist auch kein automatischer Weißabgleich erforderlich, um Fehler in der Farbtemperatur auszugleichen. Durch den erzielten konstanten Weißabgleich ergibt sich eine perfekte Farbwiedergabe ohne Störungen durch eine Helligkeitsmodulation. Aufgrund des Fangbereiches der PLL-Schaltung kann auch eine mit einer Bildwiederholfrequenz von 50 Hz arbeitende Kamera mit einem Stromnetz mit 60 Hz synchronisiert werden.

Das von der Kamera generierte Videosignal, das über die Anlage zu der Empfangsstelle übertragen wird, ist vorzugsweise einer Datenreduktion unterworfen. Diese besteht z.B. darin, daß nur Änderungen im Bild zwischen aufeinanderfolgenden Bildern übertragen werden. Da bei einem Fernsehtelefon erfahrungsgemäß die Änderungen im Bild relativ gering sind, kann dadurch die übertragene Datenmenge nennenswert herabgesetzt oder ein Übertragungskanal besser ausgenutzt werden.

Vorzugsweise ist die PLL-Schaltung so eingestellt, daß die Belichtungszeit beim Maximum der Netzspannung liegt. Dadurch wird eine optimale Lichtausbeute des auf das Target projizierten Bildes erreicht. Die Netzspannung kann galvanisch an die PLL-Schaltung angelegt sein. Ebenso kann eine aus dem magnetischen Streufeld des Netzgerätes abgeleitete Spannung an die PLL-Schaltung angelegt werden.

Alternativ kann auch ein Heilligkeitssensor in Form einer Fotodiode für das Umgebungslicht vorgesehen und über eine Auswertschaltung an die PLL-Schaltung angeschlossen sein. Diese Lösung hat den Vorteil, daß dann ein schaltungstechnischer Zugriff auf das Netz nicht erforderlich ist.

Der Oszillator der PLL-Schaltung schwingt vorzugsweise auf einer gegenüber der Netzfrequenz hohen Frequenz, und zwischen dem Ausgang und einem Eingang der PLL-Schaltung liegt ein Frequenzteiler, der die hohe Frequenz wieder auf die Netz- und Bildwiederholfrequenz herunterteilt. Eine derartige PLL-Schaltung mit erhöhter Oszillatorfrequenz hat den Vorteil einer einfacheren Schaltung und einer größeren Genauigkeit. Wenn die Kamera nicht an das Stromnetz angeschlossen ist, z.B. mit Akku arbeitet, ist eine Spannung mit der Netzfrequenz nicht verfügbar, so daß dann die Information über Sollfrequenz und Sollphase der Bildfrequenz fehlt. In diesem Fall läuft der Oszillator der PLL-Schaltung frei ohne Synchronisation durch eine Sollfrequenz.

Erfindungsgemäss liegt im Weg der Netzspanung zu der PLL-Schaltung ein spannungsgesteuerter Phasendreher, der von einem den Kamerabetrieb steuernden Mikroprozessor gesteuert ist. Dann kann der optimale Arbeitspunkt, d.h. die Verschlußöffnung oder Belichtungszeit beim Maximum der Helligkeit des Umgebungslichtes, automatisch eingestellt werden. Zu diesem Zweck wird die Phasendrehung des Phasendrehers zwischen 0 und 180° kontinuierlich geändert und gleichzeitig die von dem Prozessor eingestellte Belichtungszeit gemessen. Der optimale Wert der Phasendrehung liegt dann bei der minimalen Belichtungszeit und kann auf einen festen Wert eingestellt werden.

Die Erfindung wird im folgenden anhand der Zeichnung erläutert. Darin zeigen
- Fig. 1: ein Blockschaltbild für eine Fernsehtelefonanlage und
- Fig. 2: Kurven zur Erläuterung der Wirkungsweise der Anordnung nach Fig. 1.

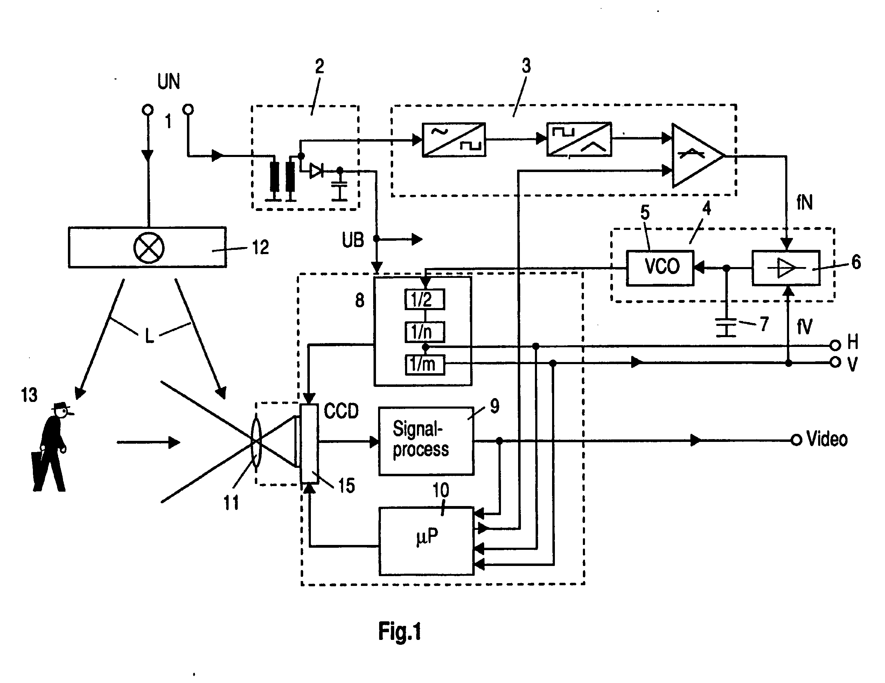

Fig. 1 zeigt die Netzklemmen 1 mit der Netzspannung UN, das Netzgerät 2, den spannungsgesteuerten Phasendreher 3, die PLL-Schaltung 4 mit dem VCO-Oszillator 5, der Phasenvergleichsstufe 6 und dem extern angeschlossenen Siebglied 7. Ferner sind dargestellt der Frequenzteiler 8 zur Umsetzung der gegenüber der Netzfrequenz hohen Frequenz des Oszillators 5, der Signalprozessor 9, das den gesteuerten Verschluß enthaltende CCD-Target 15, das Objektiv 11, die vom der Netzspannung UN gespeiste Leuchtstoffröhre 12 zur Erzeugung des Umgebungslichtes L sowie das von der Kamera aufzunehmende Objekt 13.

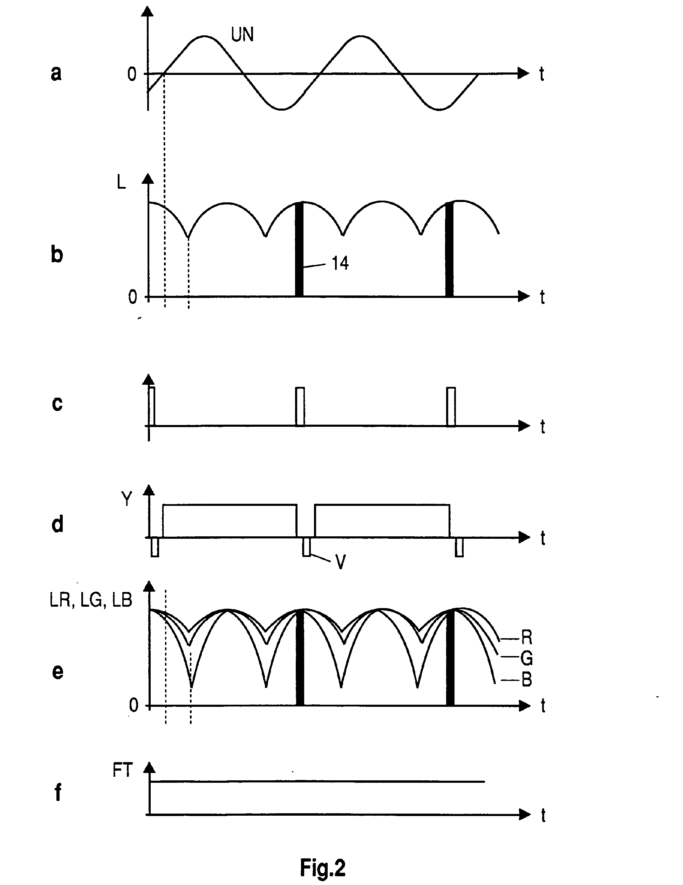

Anhand der Fig. 2 wird die Wirkungsweise der Anordnung nach Fig. 1 erläutert. Die Netzspannung UN gemäß Fig. 2a erzeugt über das Netzteil 2 zunächst die Betriebsspannung UB für die einzelnen Stufen der Anlage. Die Netzspannung UN gelangt außerdem über den Phasendreher 3 an einen Eingang der Phasenvergleichsstufe 4. Fig. 2b zeigt die Amplitude der Helligkeit des Umgebungslichtes L und in Form der schwarzen Balken 14 die Belichtungszeit oder Öffnungszeit des Verschlusses, deren Dauer gering ist gegenüber der Netzperiode. Es ist ersichtlich, daß durch die Phasenkopplung mittels der PLL-Schaltung 4 nunmehr die Belichtung oder die Öffnung des Verschlusses immer bei derselben Phase der Helligkeit L und der Netzspannung UN liegt und somit eine Modulation der Helligkeit, Änderung der Farbtemperatur und unerwünschte Bildung von Makroblöcken bei nicht vorhandenen Differenzen aufeinanderfolgender Bilder vermieden werden. Außerdem liegt die Belichtungszeit immer beim Maximum der Helligkeit L, so daß eine optimale Lichtausbeute sichergestellt ist. Fig. 2c zeigt die Impulse, die jeweils die Öffnung des Verschlusses für das CCD-Target 15 auslösen. Fig. 2d zeigt symbolisch die Amplitude des Ausgangssignals Y mit den Vertikalsynchronimpulsen V in vereinfachter Form für ein Bild ohne Modulation. Dadurch soll angedeutet werden, daß die Amplitude von Y konstant und nicht in unerwünschter Weise amplitudenmoduliert ist. Fig. 2e zeigt die Intensität des Fluorescenzlichtes in Form der RGB-Komponenten R,G,B. Es ist ersichtlich, daß wieder die Belichtungsphase relativ zu der Netzphase konstant ist und minimale Differenzen in den RGB-Kanälen auftreten. Fig. 2f zeigt in Analogie zu Fig. 2d die Farbtemperatur FT, die ebenso wie das Leuchtdichtesignal Y durch die Phasenkopplung konstant ist.

Die Steuerung der Phasendrehung des Phasendrehers 3 durch den Mikroprozessor 10 erfolgt folgendermaßen. Die Phasendrehung des Phasendrehers 3 wird selbsttätig zwischen 0 und 180° kontinuierlich geändert. Dabei wird gleichzeitig die von dem Mikroprozessor 10 eingestellte Belichtungszeit des Target 15 gemessen. Wenn diese Belichtungszeit ihren Minimalwert hat, bedeutet das, daß die Lichtausbeute maximal ist. Bei diesem Wert wird dann die Phasendrehung des Phasendrehers 3 fest eingestellt. Dann ist sichergestellt, daß die Belichtungszeit gemäß Fig. 2b immer beim Maximum der Beleuchtung L liegt.

## Patentansprüche

1. Fernsehtelefonanlage mit einer Kamera und einem von einer Steuerschaltung jeweils nur während einer kurzen Belichtungszeit geöffneten Verschluss, **dadurch gekennzeichnet,**
**dass** das von der Kamera erzeugte und zu übertragende Signal einer Datenreduktion unterworfen ist, durch die nur Änderungen im Bild zwischen aufeinanderfolgenden Bildern übertragen werden und Macroblöcke für ein Differenzsignal gebildet werden,
**dass** die Steuerschaltung (10) und das das Umgebungslicht (L) erzeugende Stromnetz (UN) durch eine PLL-Schaltung (4) derart verkoppelt sind, dass die Belichtungszeit stets bei derselben Phase der Netzspannung (UN) liegt, und
**dass** im Weg des Stromnetzes (UN) zu einer Phasenvergleichsstufe (6) der PLL-Schaltung (4) ein spannungsgesteuerter Phasendreher (3) liegt, der von einem den Kamerabetrieb steuernden Mikroprozessor (10) gesteuert ist,
wobei durch den Phasendreher (3) der optimale Arbeitspunkt des Verschlusses , d. h. die Verschlussöffnung oder Belichtungszeit beim Maximum der Helligkeit des Umgebungslichtes, eingestellt werden kann.

2. Anlage nach Anspruch 1, **dadurch gekennzeichnet, dass** die PLL-Schaltung so eingestellt ist, dass die Belichtungszeit beim Maximum der Netzspannung (UN) liegt.

3. Anlage nach Anspruch 1, **dadurch gekennzeichnet, dass** die Netzspannung an die PLL-Schaltung (4) angelegt ist.

4. Anlage nach Anspruch 1, **dadurch gekennzeichnet, dass** an die PLL-Schaltung (4) eine aus dem magnetischen Streufeld des Netzgerätes abgeleitete Spannung angelegt ist.

5. Anlage nach Anspruch 1, **dadurch gekennzeichnet, dass** ein Helligkeitssensor für das Umgebungslicht (L) vorgesehen und über eine Auswertschaltung an die PLL-Schaltung (4) angeschlossen ist.

6. Anlage nach Anspruch 1, **dadurch gekennzeichnet, dass** der Oszillator (5) der PLL-Schaltung (4) auf einer gegenüber der Netzfrequenz (fN) hohen Frequenz schwingt und zwischen dem Ausgang und einem Eingang der PLL-Schaltung (4) ein Frequenzteiler (8) liegt.

7. Anlage nach Anspruch 1, **dadurch gekennzeichnet, dass** als Frequenzteiler (8) ein in einem Timing-Generator bereits vorhandener Frequenzteiler ausgenutzt ist.

## Claims

1. Videophone system having a camera and a shutter which is in each case opened by a control circuit only for a short exposure time, **characterized in that** the signal produced by the camera and to be transmitted is subjected to data reduction by means of which only changes in the image between successive images are transmitted and macroblocks are formed for a difference signal;
the control circuit (10) and the mains power supply (UN) which produces the ambient light (L) are coupled by means of a PLL circuit (4) in such a manner that the exposure time always occurs at the same phase of the mains voltage (UN); and
a voltage-controlled phase shifter (3) is located in the path of the mains voltage (UN) to a phase comparison stage (6) of the PLL circuit (4) and is controlled by a microprocessor (10) which controls the camera operation, wherein the optimum operating point of the shutter can be adjusted by the phase shifter (3), i.e. the shutter opening or exposure time when the ambient light is at its maximum brightness.

2. System according to claim 1, **characterized in that**
the PLL circuit is set such that the exposure time occurs at the maximum of the mains voltage (UN).

3. System according to claim 1, **characterized in that**
the mains voltage is applied to the PLL circuit (4).

4. System according to claim 1, **characterized in that**
a voltage which is derived from the stray magnetic field from the power supply unit is applied to the PLL circuit (4) .

5. System according to claim 1, **characterized in that**
a brightness sensor is provided for the ambient light (L) and is connected via an evaluation circuit to the PLL circuit (4).

6. System according to claim 1, **characterized in that**
the oscillator (5) of the PLL circuit (4) oscillates at a frequency which is high in comparison with the mains frequency (fN) and a frequency divider (8) is located between the output and an input of the PLL circuit (4).

7. System according to claim 1, **characterized in that**
a frequency divider which already exists in a timing generator is used as the frequency divider (8).

## Revendications

1. Système vidéophone possédant une caméra et un obturateur ouvert à chaque fois par un circuit de commande uniquement durant un court temps d'exposition,
**caractérisé en ce que**
le signal produit par la caméra et à transmettre est soumis à une réduction de données, via laquelle seules des modifications dans l'image entre des images successives sont transmises et des macroblocs sont formés pour un signal de différence,
le circuit de commande (10) et le réseau électrique (UN) produisant la lumière ambiante (L) sont couplés via un circuit PLL (4) de telle manière que le temps d'exposition ait toujours lieu lors de la même phase de la tension de réseau (UN), et
un déphaseur (3) commandé en tension se situe sur le chemin du réseau électrique (UN) allant vers un étage de comparaison de phase (6) du circuit PLL (4), lequel déphaseur est commandé par un microprocesseur (10) commandant le fonctionnement de la caméra,
où le point optimal de fonctionnement de l'obturateur, c'est-à-dire l'ouverture de l'obturateur ou le temps d'exposition lors de la luminosité maximale de la lumière ambiante, peut être réglé par le déphaseur (3).

2. Système selon la revendication 1, **caractérisé en ce que** le circuit PLL est réglé de sorte que le temps d'exposition ait lieu lors du maximum de la tension de réseau (UN).

3. Système selon la revendication 1, **caractérisé en ce que** la tension de réseau est appliquée au circuit PLL (4).

4. Système selon la revendication 1, **caractérisé en ce qu'**une tension dérivée du champ de dispersion magnétique de l'appareil d'alimentation est appliquée au circuit PLL (4).

5. Système selon la revendication 1, **caractérisé en ce qu'**un capteur de luminosité est fourni pour la lumière ambiante (L) et est connecté au circuit PLL (4) via un circuit d'évaluation.

6. Système selon la revendication 1, **caractérisé en ce que** l'oscillateur (5) du circuit PLL (4) oscille à une fréquence élevée par rapport à la fréquence de réseau (fN) et un diviseur de fréquence (8) est situé entre la sortie et une entrée du circuit PLL (4).

7. Système selon la revendication 1, **caractérisé en ce qu'**un diviseur de fréquence déjà présent dans un générateur de synchronisation est utilisé comme diviseur de fréquence (8).
